# EUROPEAN PATENT SPECIFICATION

(11) **EP 4 155 120 B1**
(45) Date of publication and mention of the grant of the patent: **07.10.2026**
(21) Application number: 21814346.9
(22) Date of filing: 25.05.2021
(51) Int. Cl.: B60L 58/27, B60L 58/00, B60L 58/10, B60L 58/24, H01M 10/615, H01M 10/625, H01M 10/6571, H01M 10/637, B60L 15/02, B60L 15/08, B60L 15/20, B60L 58/25, H01M 10/48, H01M 10/633, H01M 10/63

(54) **POWER BATTERY HEATING METHOD FOR ELECTRIC AUTOMOBILE, DEVICE, AND AUTOMOBILE**
VERFAHREN ZUR ERWÄRMUNG EINER STROMBATTERIE FÜR EIN ELEKTRISCHES AUTOMOBIL, VORRICHTUNG UND AUTOMOBIL
PROCÉDÉ DE CHAUFFAGE DE BATTERIE D'ALIMENTATION POUR UNE AUTOMOBILE ÉLECTRIQUE, DISPOSITIF ET AUTOMOBILE

(30) Priority: 29.05.2020 CN 202010476466
(43) Date of publication of application: 29.03.2023
(73) Proprietor: BYD Company Limited, Shenzhen, Guangdong 518118 (CN)
(72) Inventor: HE, Long, Shenzhen, Guangdong 518118 (CN); DENG, Linwang, Shenzhen, Guangdong 518118 (CN); FENG, Tianyu, Shenzhen, Guangdong 518118 (CN); LIU, Sijia, Shenzhen, Guangdong 518118 (CN)
(74) Representative: Mathys & Squire
(86) International application number: PCT/CN2021/095831
(87) International publication number: WO 2021/238925

(56) References cited:
- WO-A1-2014/024490
- WO-A1-2016/113880
- CN-A- 103 392 258
- CN-A- 107 293 821
- CN-A- 108 847 513
- CN-A- 109 599 632
- CN-A- 110 116 653
- CN-A- 110 126 678
- CN-A- 110 534 820
- CN-A- 111 181 208
- US-A1- 2008 143 281
- US-A1- 2012 200 241
- US-A1- 2015 180 398

## Description

### FIELD

The present invention relates to the field of electric vehicles, and more specifically, to a power battery heating method and device for an electric vehicle and a vehicle.

### BACKGROUND

With the development of science and technology, an electric vehicle gradually becomes widely used, and a market share of the electric vehicle becomes increasingly high. As a core power source in the electric vehicle, a power battery is applied in different environments. However, in the different environments, the performance of the power battery is easily affected by the ambient temperature. For example, when the power battery is in a low temperature environment at minus 20°C, an internal resistance of the power battery significantly increases, a power output and available capacity of the power battery are reduced, which affects the performance of the electric vehicle.

Currently, a heating tube is generally arranged outside the power battery to heat the power battery from the outside of the power battery. However, according to the method for heating the power battery by relying on the external heating tube of the power battery, the conversion efficiency of energy transferred from the heating tube to the power battery is relatively low and requires long heating time, and the heat is easily dissipated to the outside, resulting in a waste of energy.

US 2012/200241 A1 discloses a controller for vector-controlled motor of vehicle judges whether a battery needs to be warmed up in accordance with an output of a battery temperature sensor, and when the battery needs to be warmed up, in situation where the vehicle is stopped, sets a d-axis current at a value for battery warm-up.

US 2008/143281 A1 discloses an apparatus and a method for controlling a battery in which the motor is driven at different operations points to heat up the battery.

WO 2014/024490 A1 discloses a temperature elevation control circuit for elevation of the temperature of a secondary battery in an electrically operated device that is provided with a motor that performs drive using power that is supplied from the secondary battery, and an inverter that controls the rotation of the motor by controlling supply of power from the secondary battery to the motor. The temperature elevation control circuit is provided with a heating control section that performs heating control of the heat that the secondary battery itself generates by, in a mode in which the motor is not being rotated by the inverter, discharging the secondary battery and supplying power from the secondary battery to the motor.

### SUMMARY

The present invention is defined by the appended independent claims and provides a power battery heating method and device for an electric vehicle and a vehicle, so as to solve the problem of low energy conversion efficiency when the power battery is heated.

Claim 1 discloses a power battery heating method for an electric vehicle according to the invention.

Claim 6 discloses a power battery heating device for an electric vehicle according to the invention.

A vehicle includes the foregoing power battery heating device for an electric vehicle.

According to the power battery heating method and device for an electric vehicle and the vehicle, the heating power demand of a power battery is acquired, power demand information of the driving module of the electric vehicle is acquired in real time, and the current heating power of the power battery is determined according to the power demand information. The driving module is connected with the power battery, and the driving module includes a motor controller and a driving motor. The compensating heating current is acquired according to the heating power demand and the current heating power when the current heating power is less than the heating power demand. During the control of the driving motor to drive the electric vehicle into operation according to the power demand information by the motor controller, the motor controller is caused to regulate the control current of the driving motor according to the compensating heating current, so that the driving motor outputs the high-frequency oscillation current equal to the compensating heating current. The power battery is caused to perform self-heating according to the high-frequency oscillation current outputted by the driving motor. In the present invention, if the current heating power is less than the heating power demand, the control current of the driving motor is regulated by the motor controller to increase the reactive power of the driving motor while it is ensured that the power demand information is satisfied, so that the driving motor outputs a high-frequency oscillation current, and the power battery is caused to perform self-heating according to the high-frequency oscillation current. In this way, the heating power of the internal resistance of the power battery is increased, thereby achieving the effect of rapidly heating the power battery when the electric vehicle is traveling with a driving force corresponding to the power demand information, and the energy conversion efficiency is improved. In addition, a large amount of dissipated heat is not generated by heating the internal resistance of the power battery. In addition, by using the above method of the present invention, the power battery may be heated or kept warm by using the outputted high-frequency oscillation current before a user uses the electric vehicle, so that the user can directly use the electric vehicle without preheating the power battery, which saves time for the user, improves the use efficiency of the electric vehicle, and extends the life of the power battery.

### BRIEF DESCRIPTION OF THE DRAWINGS

To describe the technical solutions of the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a power battery heating method for an electric vehicle according to an embodiment of the present invention.
FIG. 2 is a flowchart of S12 of a power battery heating method for an electric vehicle according to an embodiment of the present invention.
FIG. 3 is a flowchart of S14 of a power battery heating method for an electric vehicle according to the embodiment of the present invention.
FIG. 4 is a flowchart of S142 of a power battery heating method for an electric vehicle according to an embodiment of the present invention.
FIG. 5 is a schematic block diagram of a power battery heating device for an electric vehicle according to an embodiment of the present invention.
FIG. 6 is another schematic block diagram of a power battery heating device of an electric vehicle according to an embodiment of the present invention.

Reference numerals in the accompanying drawings are as follows:
1-Driving module; 10-Controller; 11-Power battery; 12-Three-phase inverter; 13-Motor controller; 14-Driving motor.

### DETAILED DESCRIPTION

The following clearly and completely describes the technical solutions in the embodiments of the present invention with reference to the accompanying drawings in the embodiments of the present invention. Apparently, the described embodiments are merely some of the embodiments of the present invention rather than all of the embodiments. All other embodiments obtained by a person of ordinary skill in the art based on the embodiments of the present invention without creative efforts shall fall within the protection scope of the present invention.

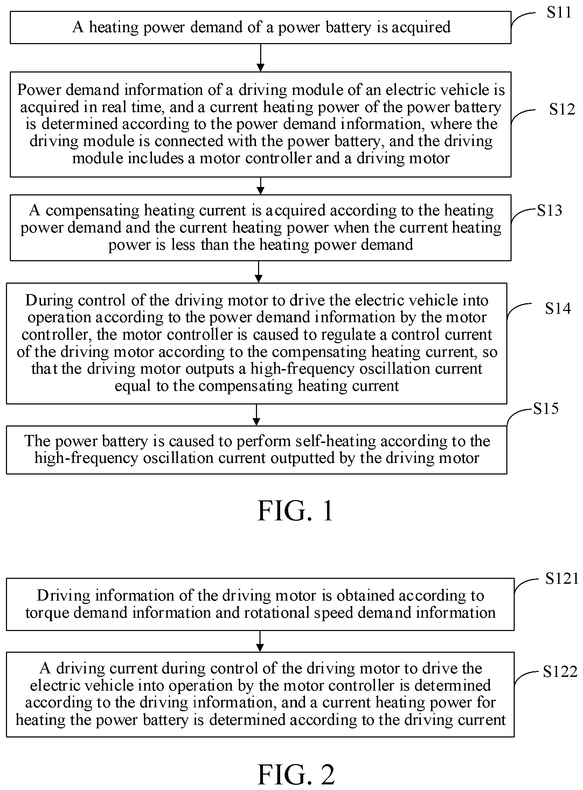

In an embodiment, as shown in FIG. 1, a power battery heating method for an electric vehicle is provided, including the following steps.

S11: A heating power demand of a power battery 11 is acquired.

The power battery 11 is a power battery 11 mounted to an electric vehicle. The power battery 11 may be a lithium-ion battery. The heating power demand may be set by a user according to a heating demand for the power battery 11. For example, when the user uses the electric vehicle and needs to accelerate discharging or charging the power battery 11, one heating power demand can be set. Alternatively, when the user uses the electric vehicle in a low temperature environment, the performance of the power battery 11 in the low temperature environment is degraded by 30% to 50% or even more than the performance of the power battery at a normal temperature. Therefore, the user can set one heating power demand according to an actual demand to heat the power battery 11, so that the temperature of the power battery 11 reaches a preset normal temperature range that can ensure the performance of the power battery in a stable state.

S12: Power demand information of a driving module 1 of an electric vehicle is acquired in real time, and a current heating power of the power battery 11 is determined according to the power demand information, where the driving module 1 is connected with the power battery 11, and the driving module 1 includes a motor controller 13 and a driving motor 14.

The electric vehicle is a vehicle in which an onboard power supply is used as power and wheels are driven to travel by the driving motor 14 in the driving module 1. The driving module 1 is configured to drive the electric vehicle to travel, the driving module 1 is connected with the power battery 11, and the driving module 1 includes the motor controller 13 and the driving motor 14. The power demand information may be demands of the user for a driving force of the electric vehicle, and may be set by the user. The power demand information includes torque demand information, rotational speed demand information, and the like. The current heating power is a power corresponding to energy stored or released by the power battery 11 when the electric vehicle is driven to move according to the power demand information. The current heating power is essentially a part of an active power of the driving motor 14 (the active power includes at least a power used for driving the electric vehicle to move and a power used for causing the power battery to store or release energy, both of which correspond to the power demand information). The motor controller 13 is an integrated circuit that controls the driving motor 14 to operate according to a set direction, speed, angle, and response time. The driving motor 14 is an electromagnetic device that realizes conversion or transfer of electric energy according to the law of electromagnetic induction.

Specifically, according to the power demand information of the driving module 1 of the electric vehicle that is acquired in real time, the motor controller 13 in the driving module 1 controls the operation of the motor according to the power demand information, so as to drive the electric vehicle to travel in a state in which the power demand information is satisfied. When the electric vehicle is driven to travel by the driving motor, the power battery 11 also generates the current heating power corresponding to the power demand information.

S13: When the current heating power is less than the heating power demand, a compensating heating current is acquired according to the heating power demand and the current heating power.

The compensating heating current is a compensating heating current corresponding to a difference power between the heating power demand and the current heating power. As long as the driving motor drives the electric vehicle to travel according to the power demand information, the driving motor can additionally compensate for the compensating heating current, so that the power battery can satisfy the heating demand and perform self-heating to a proper preset normal temperature range to achieve the heating power demand.

Specifically, after the current heating power of the power battery 11 is determined according to the power demand information, the current heating power is compared with the heating power demand. When the current heating power is less than the heating power demand, the difference power between the heating power demand and the current heating power is obtained according to the heating power demand and the current heating power, and the compensating heating current is determined according to a current internal resistance value and the difference power of the power battery 11.

S14: During control of the driving motor 14 to drive the electric vehicle into operation according to the power demand information by the motor controller 13, the motor controller 13 is caused to regulate a control current of the driving motor 14 according to the compensating heating current, so that the driving motor 14 outputs a high-frequency oscillation current equal to the compensating heating current.

The high-frequency oscillation current is a current outputted by an oscillation circuit in the driving motor 14, and the high-frequency oscillation current is essentially a current corresponding to the reactive power added to the driving motor 14.

Specifically, during the control of the driving motor 14 to drive the electric vehicle into operation according to the power demand information by the motor controller 13, the compensating heating current is inputted to the motor controller 13 after the compensating heating current is acquired according to the heating power demand and the current heating power. The motor controller 13 is caused to regulate the control current of the driving motor 14 according to the compensating heating current, so that the driving motor 14 is caused to output a same high-frequency oscillation current as the compensating heating current.

S15: The power battery 11 is caused to perform self-heating according to the high-frequency oscillation current outputted by the driving motor 14.

Specifically, after the motor controller 13 regulates the control current of the driving motor 14 according to the compensating heating current, so that the driving motor 14 outputs the high-frequency oscillation current equal to the compensating heating current, since the driving motor 14 and the power battery 11 are connected in series, the high-frequency oscillation current also exists in the power battery 11 when the driving motor 14 outputs the high-frequency oscillation current. The power battery 11 utilizes, according to the high-frequency oscillation current, the heat generated by the internal resistance of the battery to achieve self-heating.

In this embodiment, when the current heating power is less than the heating power demand, the control current of the driving motor is regulated by the motor controller to increase the reactive power of the driving motor while it is ensured that the power demand information is satisfied, so that the driving motor outputs the high-frequency oscillation current, and the power battery performs self-heating according to the high-frequency oscillation current. In this way, the heating power of the internal resistance of the power battery is increased, thereby achieving the effect of rapidly heating the power battery when the electric vehicle is traveling with a driving force corresponding to the power demand information, and the energy conversion efficiency is improved. In addition, the high-frequency oscillation current is the current used repeatedly, which improves the utilization of the battery core heating energy of the power battery, and also extends the life of the power battery. In addition, by using the above method, the power battery may be heated or kept warm by using the outputted high-frequency oscillation current before a user uses the electric vehicle, so that the user can directly use the electric vehicle without preheating the power battery, which saves time for the user and improves the use efficiency of the electric vehicle. Since the method is to increase the reactive power of the driving motor while satisfying the power demand information, the power demand information and the heating power demand can be continuously and dynamically sent during the use of the electric vehicle by the user.

In an embodiment, as shown in FIG. 2, the power demand information includes torque demand information and rotational speed demand information. Step S12 of determining the current heating power of the power battery 11 according to the power demand information includes the following steps.

S121: Driving information of the driving motor 14 is obtained according to the torque demand information and the rotational speed demand information.

The torque demand information is demands of the user for the rotating force of the driving motor 14 of the electric vehicle. The rotational speed demand information includes requirements of the user for the rotational speed of the driving motor 14 of the electric vehicle, and the like. The driving information is essentially the driving force of the driving motor 14, that is, the active power of the driving motor 14.

After the power demand information of the driving module 1 of the electric vehicle is acquired in real time, the driving information of the driving motor 14 is determined according to the torque demand information and the rotational speed demand information in the power demand information.

S122: A driving current during control of the driving motor 14 to drive the electric vehicle into operation by the motor controller 13 is determined according to the driving information, and a current heating power for heating the power battery 11 is determined according to the driving current.

Specifically, after the driving information of the driving motor 14 is obtained according to the torque demand information and the rotational speed demand information, the current heating power for heating the power battery 11 is determined according to the driving current and the internal resistance value of the power battery 11.

The internal resistance value of the power battery may be determined by acquiring a current state of charge (SOC) value of the power battery. Specifically, an open-circuit voltage of the power battery 11 is related to the SOC of the power battery 11. Therefore, as long as the current SOC of the power battery 11 is determined, the open-circuit voltage can be determined accordingly, and the internal resistance value of the power battery can also be acquired while the open-circuit voltage is determined. In the present invention, the open-circuit voltage of the power battery 11 is stored in a battery management system (BMS) or other databases in association with the SOC. Therefore, after the current SOC of the power battery 11 is acquired, the current internal resistance value of the power battery 11 is acquired from the BMS or other databases according to the acquired current SOC (during actual operation of the power battery 11, the current SOC of the power battery at a current moment can be measured in real time).

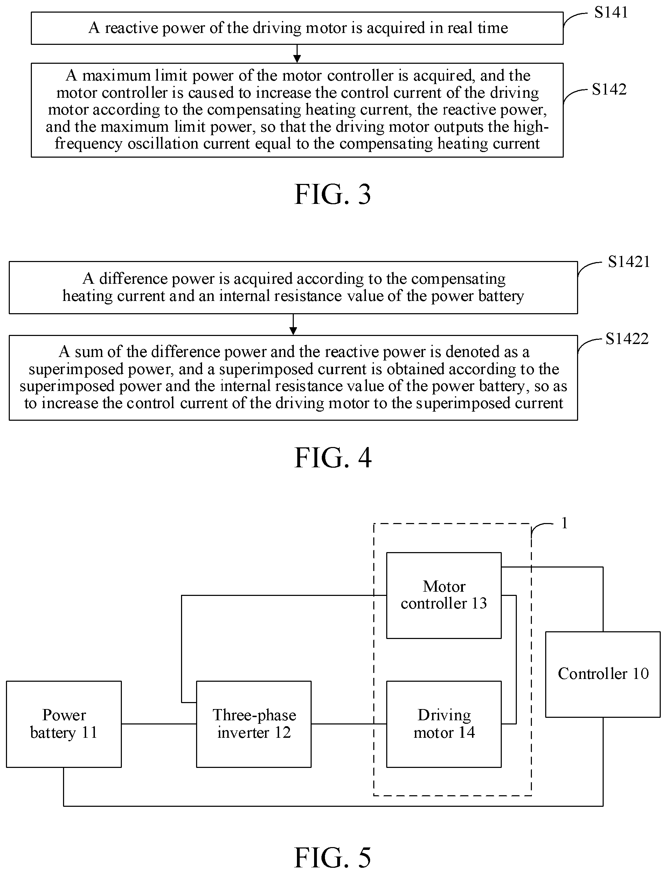

According to the present invention, as shown in FIG. 3, step S14 of causing the motor controller 13 to regulate a control current of the driving motor 14 according to the compensating heating current, so that the driving motor 14 outputs a high-frequency oscillation current equal to the compensating heating current includes the following steps.

S141: A reactive power of the driving motor 14 is acquired in real time.

The reactive power is an electric power required in the driving motor 14 for establishing an alternating magnetic field and induced magnetic flux. It may be understood that each driving motor 14 has a certain reactive power correspondingly in an initial stage, the reactive power corresponding to each driving motor 14 in the initial stage may be the same or different, and the reactive power is not converted to mechanical energy, thermal energy, or the like. Therefore, the reactive power does not affect the traveling process of the electric vehicle. That is to say, a change of the reactive power does not have an impact on the power demand information.

S142: A maximum limit power of the motor controller 13 is acquired, and the motor controller 13 is caused to increase the control current of the driving motor 14 according to the compensating heating current, the reactive power, and the maximum limit power, so that the driving motor 14 outputs the high-frequency oscillation current equal to the compensating heating current.

The maximum limit power is a maximum limit value of the power that may be regulated by the motor controller 13.

After the reactive power of the driving motor 14 is acquired in real time, the maximum limit power of the motor controller 13 is acquired, and the motor controller 13 is caused to increase the control current of the driving motor 14 according to the compensating heating current, the reactive power, and the maximum limit power, so as to increase the reactive power of the driving motor 14. The driving motor 14 is caused to output the high-frequency oscillation current equal to the compensating heating current, the heating power of the power battery 11 reaches the heating power demand, and the increased control current of the driving motor does not exceed the current value corresponding to the maximum limit power of the motor controller.

In an embodiment, as shown in FIG. 4, step S142 of causing the motor controller 13 to increase the control current of the driving motor 14 according to the compensating heating current, the reactive power, and the maximum limit power, so that the driving motor 14 outputs the high-frequency oscillation current equal to the compensating heating current includes the following steps.

S1421: A difference power is acquired according to the compensating heating current and an internal resistance value of the power battery 11.

The difference power is obtained according to a difference between the heating power demand and the current heating power.

After the compensating heating current is acquired according to the heating power demand and the current heating power, the difference power is acquired according to the compensating heating current and the internal resistance value of the power battery 11.

S1422: A sum of the difference power and the reactive power is denoted as a superimposed power, and a superimposed current is obtained according to the superimposed power and the internal resistance value of the power battery 11, so as to increase the control current of the driving motor 14 to the superimposed current.

The superimposed power is obtained after the difference power and the reactive power are superimposed. The superimposed power is a new reactive power of the driving motor. The superimposed power includes a corresponding first reactive power for maintaining the rotation of the driving motor and a corresponding second reactive power for generating the high-frequency oscillation current. The superimposed current is a current corresponding to the superimposed power and the internal resistance value of the power battery 11, and the superimposed current is a threshold of the control current to be increased.

Specifically, after the difference power is acquired according to the compensating heating current and the internal resistance value of the power battery 11, the sum of the difference power and the reactive power is denoted as the superimposed power, and the superimposed current is obtained according to the superimposed power and the internal resistance value of the power battery 11, so that the motor controller 13 increases the control current of the driving motor 14 to the superimposed current, and the current heating power of the power battery 11 with the control current of the driving motor 14 being increased reaches the heating power demand (in addition, the electric vehicle travels under the power demand information, the rotation of the driving motor is maintained according to the first reactive power in the superimposed power, and the driving motor is caused to output the high-frequency oscillation current corresponding to the second reactive power according to the second reactive power in the superimposed power, for the power battery to perform self-heating according to the high-frequency oscillation current).

In an embodiment, the increasing the control current of the driving motor 14 to a superimposed current includes:
increasing the control current of the driving motor 14 to the superimposed current by increasing an exciting current of the driving motor 14 or by space vector modulation.

The exciting current is a current flowing through a rotor of a synchronous motor when an operating magnetic field is provided. The space vector modulation is a process of generating a space vector that meets requirements of any position and a certain amplitude range according to a combination of a limited number of space vectors that determine positions. The space vector modulation includes voltage space vector modulation, flux linkage space vector modulation, and current space vector modulation.

Specifically, after the superimposed current is obtained according to the second difference power and the internal resistance value of the power battery 11, the control current of the driving motor 14 can be increased to the superimposed current by increasing the exciting current of the driving motor 14.

Further, under the premise of ignoring losses of the three-phase inverter 12 connected with the motor controller 13, expressions of the active power and reactive power of the driving motor 14 may be obtained according to an instantaneous power theory as follows: $p = {u}_{d} {i}_{d} + {u}_{q} {i}_{q}$ $q = {u}_{q} {i}_{d} - {u}_{d} {i}_{q}$

*p* is the active power of the driving motor 14, *q* is the reactive power of the driving motor 14, *u_{d}* is a voltage generated when a rotating coordinate system of the driving motor 14 is fixed to a *d*-axis, *i_{d}* is a current generated when the rotating coordinate system of the driving motor 14 is fixed to a *d*-axis, that is, the exciting current, *u_{q}* is a voltage generated when the rotating coordinate system of the driving motor 14 is fixed to a *q*-axis, and *i_{q}* is a current generated when the rotating coordinate system of the driving motor 14 is fixed to a *q-*axis.

Under conventional field-oriented control (FOC), the rotating coordinate system of the driving motor 14 is fixed to a *q*-axis, therefore *u_{d}* = 0, and the expression of the above instantaneous power is finally: $p = {u}_{q} {i}_{q}$ $q = {u}_{q} {i}_{d}$

By increasing the exciting current of the driving motor 14, that is, increasing *i_{d}* in the above expression, the reactive power of the driving motor 14 is increased while it is ensured that the torque information and the rotational speed information in the power demand information are satisfied, that is, the active power is satisfied. In this way, the power battery 11 performs self-heating according to the high-frequency oscillation current outputted by the driving motor 14, and the internal resistance of the power battery 11 generates heat.

Further, after the superimposed current is obtained according to the second difference power and the internal resistance value of the power battery 11, the control current of the driving motor 14 may further be increased to the superimposed current by space vector modulation, that is, by replacing a zero vector with an effective vector, so as to increase the reactive power of the driving motor 14.

Further, an expression of an apparent power of the driving motor 14 is as follows: ${s}^{2} = {p}^{2} + {q}^{2}$

*s* is an apparent power of the driving motor 14, *p* is the active power of the driving motor 14, and *q* is the reactive power of the driving motor 14.

Therefore, the control current of the driving motor 14 is increased to the superimposed current by increasing the exciting current of the driving motor 14 or by the space vector modulation. That is to say, the reactive power of the driving motor 14 is increased under the premise of ensuring that the active power corresponding to the power demand information is satisfied, so that the driving motor 14 outputs the maximum apparent power and the high-frequency oscillation current, and the power battery 11 is caused to perform self-heating according to the high-frequency oscillation current, thereby realizing continuous and dynamic regulation of the internal heating power of the power battery 11.

In an embodiment, after the causing, during control of the driving motor 14 to drive the electric vehicle into operation according to the power demand information by the motor controller 13, the motor controller 13 to regulate a control current of the driving motor 14 according to the compensating heating current, the method further includes:
acquiring a high-frequency oscillation current outputted by the driving motor 14 after the regulation, and prompting a regulation failure if the high-frequency oscillation current is less than the compensating heating current.

During the control of the driving motor 14 to drive the electric vehicle into operation according to the power demand information by the motor controller 13, after the motor controller 13 is caused to regulate the control current of the driving motor 14 according to the compensating heating current, the high-frequency oscillation current outputted by the driving motor 14 after the regulation is acquired. If the high-frequency oscillation current is less than the compensating heating current, the regulation failure is prompted by voice prompt, by sending a text message to a mobile terminal of a user, or in other effective prompting manners.

A real-time temperature of the power battery 11 is detected, and a temperature anomaly of the power battery 11 is prompted when the real-time temperature is less than a lower limit of a preset normal temperature range.

The real-time temperature is a temperature of the power battery 11 that is measured in real time at any current time. The preset normal temperature range may be a normal temperature range, that is, 20°C to 25°C. The preset normal temperature range may be slightly adjusted according to requirements of the user.

When the high-frequency oscillation current is less than the compensating heating current, the real-time temperature of the power battery 11 is detected synchronously during prompting of the regulation failure. When the real-time temperature is less than the lower limit of the preset normal temperature range, the temperature anomaly of the power battery 11 is prompted by the voice prompt, by sending a text message to the mobile terminal of the user, or in other effective prompting manners. The temperature anomaly may mean that when the power battery 11 performs self-heating according to the high-frequency oscillation current outputted by the driving motor 14, the temperature of the power battery 11 cannot reach the lower limit of the preset normal temperature range due to a relatively small high-frequency oscillation current. The user may resend the heating power demand according to the currently detected real-time temperature of the power battery 11 and according to the method in the above embodiments of the present invention.

In an embodiment, as shown in FIG. 5, a power battery heating device for an electric vehicle includes a driving module 1, a three-phase inverter 12, and a controller 10. The driving module 1 includes a motor controller 13 and a driving motor 14. The motor controller 13 is connected with the three-phase inverter 12, the controller 10, and the driving motor 14. The three-phase inverter 12 is connected with the power battery 11 and the driving motor 14. The controller 10 is connected with the power battery 11 and the motor controller 13.

The power battery and the three-phase inverter are connected by a power line. The three-phase inverter and the driving motor are connected by the power line. The motor controller and the three-phase inverter are connected by a signal line. The controller and the motor controller are connected by a signal line. The power battery and the controller are connected by the signal line.

The driving module 1 is configured to drive the electric vehicle to travel, and the driving module 1 includes the motor controller 13 and the driving motor 14. The motor controller 13 is an integrated circuit that controls, by active operation, the driving motor 14 to operate according to a set direction, speed, angle, and response time. The driving motor 14 is an electromagnetic device that realizes conversion or transfer of electric energy according to the law of electromagnetic induction. The three-phase inverter 12 is a device that converts a direct current to an alternating current. Optionally, in this embodiment, the three-phase inverter 12 adopts an H-bridge inverter composed of an insulated gate bipolar transistor (IGBT) as a switching element. The controller 10 is configured to receive user requirements and control each module to participate in the operation. The motor controller 13 is an integrated circuit that controls, by active operation, the driving motor 14 to operate according to a set direction, speed, angle, and response time. The driving motor 14 is an electromagnetic device that realizes conversion or transfer of electric energy according to the law of electromagnetic induction.

The controller 10 is configured to acquire a heating power demand of the power battery 11.

The power battery 11 is a power battery 11 mounted to an electric vehicle. The power battery 11 is a lithium-ion battery. The heating power demand is set by a user according to a heating demand for the power battery 11. For example, when the user uses the electric vehicle and needs to accelerate discharging or charging the power battery 11, one heating power demand can be set. Alternatively, when the user uses the electric vehicle in a low temperature environment, the performance of the power battery 11 in the low temperature environment is degraded by 30% to 50% or even more than the performance of the power battery at a normal temperature. Therefore, the user can set one heating power demand to heat the power battery 11, so that the performance of the power battery 11 enters a stable state.

Power demand information of the driving module 1 of the electric vehicle is acquired in real time, and a current heating power of the power battery 11 is determined according to the power demand information.

The electric vehicle is a vehicle in which an onboard power supply is used as power and wheels are driven to travel by the driving motor 14 in the driving module 1. The power demand information may be demands of the user for a driving force of the electric vehicle, and is set by the user. The power demand information includes torque demand information and rotational speed demand information. The current heating power is a power corresponding to energy stored or released by the power battery 11 according to the power demand information, and the current heating power is essentially the active power of the driving motor 14.

Specifically, the power demand information is sent to the motor controller 13 through the controller 10 according to the power demand information of the driving module 1 of the electric vehicle acquired in real time. The motor controller 13 in the driving module 1 controls the operation of the motor according to the power demand information, so as to drive the electric vehicle to travel, according to the current heating power of the power battery 11 corresponding to the power demand information during the operation of the motor, in a state in which the power demand information is satisfied.

When the current heating power is less than the heating power demand, a compensating heating current is acquired according to the heating power demand and the current heating power.

The compensating heating current is a compensating heating current corresponding to a difference power between the heating power demand and the current heating power.

Specifically, after the current heating power of the power battery 11 is determined according to the power demand information, the current heating power is compared with the heating power demand. When the current heating power is less than the heating power demand, the difference power between the heating power demand and the current heating power is obtained according to the heating power demand and the current heating power, and the compensating heating current is determined according to a current internal resistance value and the difference power of the power battery 11.

During the control of the driving motor 14 to drive the electric vehicle into operation according to the power demand information by the motor controller 13, the motor controller 13 is caused to regulate a control current of the driving motor 14 according to the compensating heating current, so that the driving motor 14 outputs a high-frequency oscillation current equal to the compensating heating current.

The high-frequency oscillation current is a current outputted by an oscillation circuit in the driving motor 14, and the high-frequency oscillation current is essentially a current corresponding to the reactive power added to the driving motor 14.

Specifically, during the control of the driving motor 14 to drive the electric vehicle into operation according to the power demand information by the motor controller 13, the compensating heating current is inputted to the motor controller 13 after the compensating heating current is acquired according to the heating power demand and the current heating power. The motor controller 13 is caused to regulate the control current of the driving motor 14 according to the compensating heating current, so that the driving motor 14 is caused to output a same high-frequency oscillation current as the compensating heating current.

After the motor controller 13 regulates the control current of the driving motor 14 according to the compensating heating current, the regulated control current of the driving motor 14 is outputted to the three-phase inverter 12. The three-phase inverter 12 outputs three AC potentials with the same frequency, the same amplitude, and phases sequentially differing from each other by 120 degrees, and the three AC potentials are inputted into the driving motor 14, so that the driving motor 14 outputs the high-frequency oscillation current equal to the compensating heating current while satisfying the power demand information.

The power battery 11 is caused to perform self-heating according to the high-frequency oscillation current outputted by the driving motor 14.

Specifically, after the motor controller 13 regulates the control current of the driving motor 14 according to the compensating heating current, so that the driving motor 14 outputs the high-frequency oscillation current equal to the compensating heating current, since the driving motor 14 and the power battery 11 are connected in series, the high-frequency oscillation current also exists in the power battery 11 when the driving motor 14 outputs the high-frequency oscillation current. The power battery 11 utilizes, according to the high-frequency oscillation current, the heat generated by the internal resistance of the battery to achieve self-heating.

In an embodiment, the power demand information includes torque demand information and rotational speed demand information. The controller 10 is further configured to
obtain driving information of the driving motor 14 according to the torque demand information and the rotational speed demand information.

The torque demand information is demands of the user for the rotating force of the driving motor 14 of the electric vehicle. The rotational speed demand information is requirements of the user for the rotational speed of the driving motor 14 of the electric vehicle. The driving information is essentially the driving force of the driving motor 14, that is, the active power of the driving motor 14.

After the power demand information of the driving module 1 of the electric vehicle is acquired in real time, the driving information of the driving motor 14 is determined according to the torque demand information and the rotational speed demand information in the power demand information.

A driving current during the control of the driving motor 14 to drive the electric vehicle into operation by the motor controller 13 is determined according to the driving information, and a current heating power for heating the power battery 11 is determined according to the driving current.

Specifically, after the driving information of the driving motor 14 is obtained according to the torque demand information and the rotational speed demand information, the current heating power for heating the power battery 11 is determined according to the driving current and the internal resistance value of the power battery 11.

According to the present invention, the controller 10 is further configured to
acquire a reactive power of the driving motor 14 in real time.

The reactive power is an electric power required in the driving motor 14 for establishing an alternating magnetic field and induced magnetic flux. It may be understood that each driving motor 14 has a certain reactive power correspondingly in an initial stage, the reactive power corresponding to each driving motor 14 in the initial stage may be the same or different, and the reactive power is not converted to mechanical energy, thermal energy, or the like.

A maximum limit power of the motor controller 13 is acquired, and the motor controller 13 is caused to increase the control current of the driving motor 14 according to the compensating heating current, the reactive power, and the maximum limit power, so that the driving motor 14 outputs the high-frequency oscillation current equal to the compensating heating current.

The maximum limit power is a maximum limit value of the power that may be regulated by the motor controller 13.

After the reactive power of the driving motor 14 is acquired in real time, the maximum limit power of the motor controller 13 is acquired, and the motor controller 13 is caused to increase the control current of the driving motor 14 according to the compensating heating current, the reactive power, and the maximum limit power, so as to increase the reactive power of the driving motor 14. The driving motor 14 is caused to output the high-frequency oscillation current equal to the compensating heating current, and the heating power of the power battery 11 reaches the heating power demand.

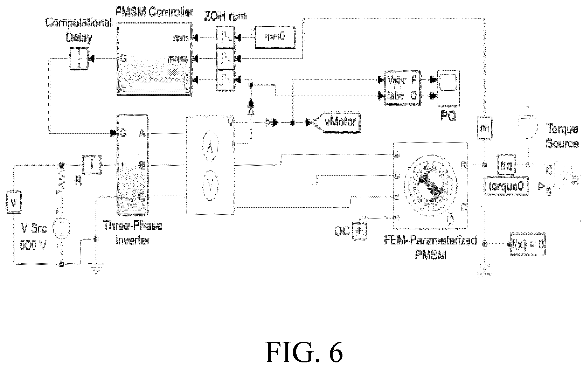

In a specific implementation, as shown in FIG. 6, the power battery heating device for an electric vehicle includes the following components and parameters: an FEM-Parameterized permanent-magnet synchronous motor (FEM-Parameterized PMSM), which is a three-phase PMSM, i.e., the driving motor as described in the above embodiments; a ground cable (OC) of the motor; a power display (PQ) configured to display an active power (P) and a reactive power (Q) of the driving motor; a torque source (Torque Source); a special physical signal (trq); a torque demand (torque0); a rotational speed demand (rpm0); a voltage source (V Src) for the power battery having a value of 500 V; an internal resistance (R) of the power battery; a voltmeter (v) connected with the power battery; an ammeter (i) connected with the power battery; a three-phase inverter (Three-Phase Inverter), which is an H-bridge inverter composed of IGBTs; a permanent-magnet synchronous motor controller (PMSM Controller), i.e., the motor controller as described in the above embodiments; a delay computing device (Computational Delay); a zero-order holder (ZOH rpm) configured to update a signal inputted to the PMSM controller after each sampling time and hold the signal until next sampling.

Optionally, the power battery heating device of the electric vehicle further includes a three-phase current voltmeter. The three-phase current voltmeter is connected with the three-phase inverter 12, the motor controller 13, and the driving motor 14. The three-phase current voltmeter is configured to detect three AC potentials outputted from the three-phase inverter 12 with the same frequency, the same amplitude, and phases differing by 120 degrees, and feed back a current value corresponding to an absolute value of the AC potential (that is, I in FIG. 6) to the motor controller 13, to determine whether the present current corresponds to the compensating heating current.

Optionally, a torque measurer (that is, a measurer corresponding to m in FIG. 6) may further be connected between the driving motor 14 and the motor controller 13. The torque measurer is configured to measure the torque value outputted by the driving motor 14 or detect the torque demand information in the power demand information sent by the user.

Optionally, the power battery heating device of the electric vehicle further includes a power display. The power display is connected with the three-phase current voltmeter, and is configured to display the active power and the reactive power of the driving motor 14, so that the user can intuitively view the power values corresponding to the current active power and reactive power of the driving motor 14.

In an embodiment, a vehicle is provided, including the foregoing power battery heating device for an electric vehicle according to the above embodiments.

It should be understood that in the foregoing embodiments, an order of sequence numbers of various steps does not indicate an execution sequence, and execution sequences of the processes should be determined according to functions and internal logics thereof and should not impose any limitation on an implementation process of the embodiments of the present invention.

It is to be clearly understood that a person skilled in the art, for the purpose of convenient and brief description, division of the foregoing function units and modules is taken as an example for illustration. In actual application, the foregoing units and functions can be allocated to different modules and implemented according to a requirement, that is, an inner structure of an apparatus is divided into different function units and modules to implement all or part of the functions described above.

The foregoing embodiments are merely intended for describing the technical solutions of the present invention, but not for limiting the present invention. Although this application is described in detail with reference to the foregoing embodiments, persons of ordinary skill in the art should understand that they may still make modifications to the technical solutions described in the foregoing embodiments or make equivalent replacements to some technical features thereof, without departing from the embodiments of the present invention as defined in the appended claims.

## Claims

1. A power battery heating method for an electric vehicle, the method comprising:
acquiring a heating power demand of a power battery (11);
acquiring power demand information of a driving module (1) of the electric vehicle in real time, and determining a current heating power of the power battery (11) according to the power demand information, wherein the driving module (1) is connected with the power battery (11); and the driving module (1) comprises a motor controller (13) and a driving motor (14);
acquiring a compensating heating current according to the heating power demand and the current heating power when the current heating power is less than the heating power demand, the compensating heating current corresponding to a difference power between the heating power demand and the current heating power;
causing, during control of the driving motor (14) to drive the electric vehicle into operation according to the power demand information by the motor controller (13), the motor controller (13) to regulate a control current of the driving motor (14) according to the compensating heating current, so that an oscillation circuit in the driving motor (14) outputs a high-frequency oscillation current corresponding to the reactive power added to the driving motor (14) equal to the compensating heating current; and
causing the power battery (11) to perform self-heating according to the high-frequency oscillation current outputted by the driving motor (14),
**characterized in that** the causing the motor controller (13) to regulate a control current of the driving motor (14) according to the compensating heating current, so that the driving motor (14) outputs a high-frequency oscillation current equal to the compensating heating current comprises:
acquiring a reactive power of the driving motor (14) in real time; and
acquiring a maximum limit power of the motor controller (13), and
causing the motor controller (13) to increase the control current of the driving motor (14) according to the compensating heating current, the reactive power, and the maximum limit power, so that the driving motor (14) outputs the high-frequency oscillation current equal to the compensating heating current, wherein the increased control current of the driving motor (14) does not exceed a current value corresponding to the maximum limit power of the motor controller (13).

2. The power battery heating method for an electric vehicle according to claim 1, wherein the power demand information comprises torque demand information and rotational speed demand information; and
the determining a current heating power of the power battery (11) according to the power demand information comprises:
obtaining driving information of the driving motor (14) according to the torque demand information and the rotational speed demand information; and
determining, according to the driving information, a driving current during the control of the driving motor (14) to drive the electric vehicle into operation by the motor controller (13), and determining the current heating power for heating the power battery (11) according to the driving current.

3. The power battery heating method for an electric vehicle according to claim 1, wherein the causing the motor controller (13) to increase the control current of the driving motor (14) according to the compensating heating current, the reactive power, and the maximum limit power, so that the driving motor (14) outputs the high-frequency oscillation current equal to the compensating heating current comprises:
acquiring a difference power according to the compensating heating current and an internal resistance value of the power battery (11); and
denoting a sum of the difference power and the reactive power as a superimposed power, and obtaining a superimposed current according to the superimposed power and the internal resistance value of the power battery (11), so as to increase the control current of the driving motor (14) to the superimposed current.

4. The power battery heating method for an electric vehicle according to claim 3, wherein the increasing the control current of the driving motor (14) to a superimposed current comprises:
increasing the control current of the driving motor (14) to the superimposed current by increasing an exciting current of the driving motor (14) or through space vector modulation.

5. The power battery heating method for an electric vehicle according to claim 1, wherein after the causing, during control of the driving motor (14) to drive the electric vehicle into operation according to the power demand information by the motor controller (13), the motor controller (13) to regulate a control current of the driving motor (14) according to the compensating heating current, so that the driving motor (14) outputs a high-frequency oscillation current equal to the compensating heating current, the method further comprises:
acquiring a high-frequency oscillation current outputted by the driving motor (14) after the regulation, and prompting a regulation failure if the high-frequency oscillation current is less than the compensating heating current; and
detecting a real-time temperature of the power battery (11), and prompting a temperature anomaly of the power battery (11) when the real-time temperature is less than a lower limit of a preset normal temperature range.

6. A power battery heating device for an electric vehicle, comprising a driving module (1), a three-phase inverter (12), and a controller (10), wherein the driving module (1) comprises a motor controller (13) and a driving motor (14); the motor controller (13) is connected with the three-phase inverter (12), the controller (10), and the driving motor (14); the three-phase inverter (12) is connected with the power battery (11) and the driving motor (14); the controller (10) is connected with the power battery (11); and the controller (10) is configured to:
acquire a heating power demand of the power battery (11);
acquire power demand information of the driving module (1) of the electric vehicle in real time, and
determine a current heating power of the power battery (11) according to the power demand information;
acquire a compensating heating current according to the heating power demand and the current heating power when the current heating power is less than the heating power demand, the compensating heating current corresponding to a difference power between the heating power demand and the current heating power;
cause, during control of the driving motor (14) to drive the electric vehicle into operation according to the power demand information by the motor controller (13), the motor controller (13) to regulate a control current of the driving motor (14) according to the compensating heating current, so that an oscillation circuit in the driving motor (14) outputs a high-frequency oscillation current corresponding to the reactive power added to the driving motor (14) equal to the compensating heating current; and
cause the power battery (11) to perform self-heating according to the high-frequency oscillation current outputted by the driving motor (14),
**characterized in that** the controller (10) is further configured to:
acquire a reactive power of the driving motor (14) in real time;
acquire a maximum limit power of the motor controller (13);
and cause the motor controller (13) to increase the control current of the driving motor (14) according to the compensating heating current, the reactive power, and the maximum limit power, so that the driving motor (14) outputs the high-frequency oscillation current equal to the compensating heating current, wherein the increased control current of the driving motor (14) does not exceed a current value corresponding to the maximum limit power of the motor controller (13).

7. The power battery heating device for an electric vehicle according to claim 6, wherein the power demand information comprises torque demand information and rotational speed demand information; and the controller (10) is further configured to:
acquire driving information of the driving motor (14) according to the torque demand information and the rotational speed demand information; determine, according to the driving information, a driving current during the controlling of the driving motor (14) to drive the electric vehicle into operation by the motor controller (13); and determine the current heating power for heating the power battery (11) according to the driving current.

8. A vehicle, comprising the power battery heating device for an electric vehicle according to any of claims 6 or 7.

## Patentansprüche

1. Verfahren zum Beheizen einer Antriebsbatterie für ein Elektrofahrzeug, wobei das Verfahren umfasst:
Erfassen eines Heizleistungsbedarfs der Antriebsbatterie (11);
Erfassen von Leistungsbedarfsinformationen eines Antriebsmoduls (1) des Elektrofahrzeugs in Echtzeit und Bestimmen einer aktuellen Heizleistung der Antriebsbatterie (11) entsprechend den Leistungsbedarfsinformationen, wobei das Antriebsmodul (1) mit der Antriebsbatterie (11) verbunden ist; und das Antriebsmodul (1) eine Motorsteuerung (13) und einen Antriebsmotor (14) umfasst;
Ermitteln eines Ausgleichsheizstroms entsprechend dem Heizleistungsbedarf und der aktuellen Heizleistung, wenn die aktuelle Heizleistung geringer ist als der Heizleistungsbedarf, wobei der Ausgleichsheizstrom einer Differenzleistung zwischen dem Heizleistungsbedarf und der aktuellen Heizleistung entspricht;
Veranlassen, dass während der Steuerung des Antriebsmotors (14) durch die Motorsteuerung (13) das Elektrofahrzeug entsprechend den Leistungsbedarfsinformationen in Betrieb genommen wird, und dass die Motorsteuerung (13) einen Steuerstrom des Antriebsmotors (14) entsprechend dem Ausgleichsheizstrom regelt, sodass ein Schwingkreis in dem Antriebsmotor (14) einen Hochfrequenz-Schwingungsstrom bzw. -Oszillationsstrom ausgibt, der der dem Antriebsmotor (14) zugeführten Blindleistung entspricht, die gleich dem Ausgleichsheizstrom ist; und
Veranlassen der Antriebsbatterie (11), eine Selbsterwärmung entsprechend dem vom Antriebsmotor (14) ausgegebenen Hochfrequenz-Oszillationsstrom durchzuführen,
**dadurch gekennzeichnet, dass** das Veranlassen der Motorsteuerung (13), einen Steuerstrom des Antriebsmotors (14) entsprechend dem Ausgleichsheizstrom zu regeln, so dass der Antriebsmotor (14) einen Hochfrequenz-Oszillationsstrom ausgibt, der dem Ausgleichsheizstrom entspricht, Folgendes umfasst:
Erfassen einer Blindleistung des Antriebsmotors (14) in Echtzeit; und
Erfassen einer maximalen Grenzleistung der Motorsteuerung (13) sowie
Veranlassen der Motorsteuerung (13), den Steuerstrom des Antriebsmotors (14) entsprechend dem Ausgleichsheizstrom, der Blindleistung und der maximalen Grenzleistung zu erhöhen, so dass der Antriebsmotor (14) den dem Ausgleichsheizstrom entsprechenden hochfrequenten Schwingungsstrom abgibt, wobei der erhöhte Steuerstrom des Antriebsmotors (14) einen Stromwert nicht überschreitet, der der maximalen Grenzleistung der Motorsteuerung (13) entspricht.

2. Verfahren zum Beheizen der Antriebsbatterie eines Elektrofahrzeugs gemäß Anspruch 1, wobei die Leistungsbedarfsdaten bzw. -informationen Drehmomentbedarfs- und Drehzahlbedarfsdaten bzw. -informationen umfassen; und
das Bestimmen einer Stromheizleistung der Antriebsbatterie (11) gemäß den Leistungsbedarfsinformationen umfasst:
das Ermitteln von Fahrinformationen des Antriebsmotors (14) entsprechend den Drehmoment- und Drehzahlbedarfsinformationen; und
das Ermitteln eines Antriebsstroms während der Steuerung des Antriebsmotors (14) durch die Motorsteuerung (13) zum Antrieb des Elektrofahrzeugs anhand der Fahrdaten sowie das Ermitteln der aktuellen Heizleistung zum Beheizen der Antriebsbatterie (11) anhand des Antriebsstroms.

3. Verfahren zum Beheizen der Antriebsbatterie eines Elektrofahrzeugs gemäß Anspruch 1, wobei das Veranlassen der Motorsteuerung (13), den Steuerstrom des Antriebsmotors (14) gemäß dem Ausgleichsheizstrom, der Blindleistung und der maximalen Grenzleistung zu erhöhen, so dass der Antriebsmotor (14) den hochfrequenten Schwingungsstrom abgibt, der dem Ausgleichsheizstrom entspricht, umfasst:
Ermitteln einer Differenzleistung entsprechend dem Ausgleichsheizstrom und einem Innenwiderstandswert der Leistungsbatterie (11); und
Bezeichnen einer Summe aus der Differenzleistung und der Blindleistung als überlagerte Leistung und Ermitteln eines überlagerten Stroms entsprechend der überlagerten Leistung und dem Innenwiderstandswert der Leistungsbatterie (11), um den Steuerstrom des Antriebsmotors (14) auf den überlagerten Strom zu erhöhen.

4. Verfahren zum Beheizen einer Antriebsbatterie für ein Elektrofahrzeug gemäß Anspruch 3, wobei das Erhöhen des Steuerstroms des Antriebsmotors (14) auf einen überlagerten Strom umfasst:
das Erhöhen des Steuerstroms des Antriebsmotors (14) auf den überlagerten Strom durch Erhöhen eines Erregungsstroms des Antriebsmotors (14) oder durch Raumvektormodulation.

5. Verfahren zum Beheizen der Antriebsbatterie eines Elektrofahrzeugs gemäß Anspruch 1, wobei nach dem Auslösen während der Steuerung des Antriebsmotors (14) zum Antrieb des Elektrofahrzeugs gemäß den Leistungsbedarfsinformationen durch die Motorsteuerung (13) die Motorsteuerung (13) den Steuerstrom des Antriebsmotors (14) entsprechend dem Ausgleichsheizstrom bzw. kompensierenden Heizstrom so regelt, dass der Antriebsmotor (14) einen hochfrequenten Schwingungsstrom abgibt, der dem kompensierenden Heizstrom entspricht, wobei das Verfahren ferner umfasst:
Erfassen eines vom Antriebsmotor (14) nach der Regelung abgegebenen Hochfrequenz-Oszillationsstroms und Auslösen einer Regelfehlermeldung, falls der Hochfrequenz-Oszillationsstrom kleiner ist als der Ausgleichsheizstrom; und
Detektieren einer Echtzeit-Temperatur der Antriebsbatterie (11) und Auslösen bzw. Angabe einer Temperatur-Anomalie der Antriebsbatterie (11), wenn die Echtzeit-Temperatur unter einer Untergrenze eines voreingestellten normalen Temperaturbereichs liegt.

6. Heizvorrichtung für eine Antriebsbatterie eines Elektrofahrzeugs, umfassend ein Antriebsmodul (1), einen Dreiphasen-Wechselrichter (12) und eine Steuerung (10), wobei das Antriebsmodul (1) eine Motorsteuerung (13) und einen Antriebsmotor (14) umfasst; die Motorsteuerung (13) mit dem Dreiphasen-Wechselrichter (12), der Steuerung (10) und dem Antriebsmotor (14) verbunden ist; der Dreiphasen-Wechselrichter (12) mit der Antriebsbatterie (11) und dem Antriebsmotor (14) verbunden ist; die Steuerung (10) ist mit der Antriebsbatterie (11) verbunden; und die Steuerung (10) ist dazu konfiguriert, um:
eine Heizleistungsanforderung der Leistungsbatterie (11) zu erfassen;
Leistungsanforderungsinformationen des Antriebsmoduls (1) des Elektrofahrzeugs in Echtzeit zu erfassen und
eine aktuelle Heizleistung der Antriebsbatterie (11) entsprechend den Leistungsbedarfsinformationen zu ermitteln;
Erfassen eines Ausgleichsheizstroms entsprechend dem Heizleistungsbedarf und der aktuellen Heizleistung, wenn die aktuelle Heizleistung geringer ist als der Heizleistungsbedarf, wobei der Ausgleichsheizstrom einer Leistungsdifferenz zwischen dem Heizleistungsbedarf und der aktuellen Heizleistung entspricht;
bewirken, dass während der Steuerung des Antriebsmotors (14) durch die Motorsteuerung (13) das Elektrofahrzeug entsprechend den Leistungsbedarfsdaten in Betrieb genommen wird, die Motorsteuerung (13) veranlasst wird, einen Steuerstrom des Antriebsmotors (14) entsprechend dem Ausgleichs-Heizstrom zu regeln, sodass ein Schwingkreis in dem Antriebsmotor (14) einen Hochfrequenz-Schwingungsstrom bzw. -Oszillationsstrom ausgibt, der der dem Antriebsmotor (14) zugeführten Blindleistung entspricht, die gleich dem Ausgleichsheizstrom ist; und
die Antriebsbatterie (11) veranlasst wird, entsprechend dem vom Antriebsmotor (14) ausgegebenen Hochfrequenz-Oszillationsstrom eine Selbsterwärmung durchzuführen,
**dadurch gekennzeichnet, dass** die Steuerung (10) ferner dazu konfiguriert ist, um:
eine Blindleistung des Antriebsmotors (14) in Echtzeit zu erfassen;
eine maximale Grenzleistung der Motorsteuerung (13) zu erfassen;
und die Motorsteuerung (13) dazu zu veranlassen, den Steuerstrom des Antriebsmotors (14) entsprechend dem Ausgleichs-Heizstrom, der Blindleistung und der maximalen Grenzleistung zu erhöhen, so dass der Antriebsmotor (14) den Hochfrequenz-Oszillationsstrom ausgibt, der dem Ausgleichs-Heizstrom entspricht, wobei der erhöhte Steuerstrom des Antriebsmotors (14) einen Stromwert nicht überschreitet, der der maximalen Grenzleistung der Motorsteuerung (13) nicht überschreitet.

7. Die Antriebsbatterie-Heizvorrichtung für ein Elektrofahrzeug gemäß Anspruch 6, wobei die Leistungsanforderungsinformationen Drehmomentanforderungsinformationen und Drehzahlanforderungsinformationen umfassen; und die Steuerung (10) ferner konfiguriert ist zum:
Erfassen von Fahrinformationen des Antriebsmotors (14) entsprechend den Drehmoment- und Drehzahlanforderungsinformationen; Bestimmen eines Fahrstroms während der Steuerung des Antriebsmotors (14) durch die Motorsteuerung (13) zum Anfahren des Elektrofahrzeugs entsprechend den Fahrinformationen; und Bestimmen der aktuellen Heizleistung zum Beheizen der Antriebsbatterie (11) entsprechend dem Fahrstrom.

8. Ein Fahrzeug, das die Antriebsbatterie-Heizvorrichtung für ein Elektrofahrzeug gemäß Anspruch 6 oder 7 umfasst.

## Revendications

1. Procédé de chauffage d'une batterie d'alimentation pour un véhicule électrique, le procédé comprenant :
l'acquisition d'une demande de la puissance de chauffage d'une batterie d'alimentation (11) ;
l'acquisition en temps réel d'informations relatives à la demande de puissance d'un module de propulsion (1) du véhicule électrique, et la détermination d'une puissance de chauffage actuelle de la batterie d'alimentation (11) selon ces informations relatives à la demande de puissance, le module de propulsion (1) étant connecté à la batterie d'alimentation (11) ; et le module de propulsion (1) comprenant un contrôleur de moteur (13) et un moteur de propulsion (14) ;
acquérir un courant de chauffage de compensation selon la demande de puissance de chauffage et la puissance de chauffage actuelle lorsque la puissance de chauffage actuelle est inférieure à la demande de puissance de chauffage, le courant de chauffage de compensation correspondant à une différence de puissance entre la demande de puissance de chauffage et la puissance de chauffage actuelle ;
faire en sorte, pendant la commande du moteur d'entraînement (14) visant à mettre le véhicule électrique en fonctionnement selon les informations de demande de puissance fournies par le contrôleur de moteur (13), le contrôleur de moteur (13) pour commander le courant de commande du moteur d'entraînement (14) selon le courant de chauffage de compensation, de sorte qu'un circuit oscillant dans le moteur d'entraînement (14) délivre un courant oscillant à haute fréquence correspondant à la puissance réactive ajoutée au moteur d'entraînement (14), égale au courant de chauffage de compensation ; et
amener la batterie d'alimentation (11) à effectuer un auto-échauffement selon le courant oscillant à haute fréquence émis par le moteur d'entraînement (14) ,
**caractérisé en ce que** le fait d'amener le contrôleur de moteur (13) à commander un courant de commande du moteur d'entraînement (14) selon le courant de chauffage de compensation, de sorte que le moteur d'entraînement (14) délivre un courant oscillant à haute fréquence égal au courant de chauffage de compensation, comprend :
l'acquisition en temps réel d'une puissance réactive du moteur d'entraînement (14) ; et
l'acquisition d'une puissance limite maximale du contrôleur de moteur (13), et
amener le contrôleur de moteur (13) à augmenter le courant de commande du moteur d'entraînement (14) selon le courant de chauffage de compensation, la puissance réactive et la puissance limite maximale, de sorte que le moteur d'entraînement (14) délivre le courant oscillant à haute fréquence égal au courant de chauffage de compensation, dans lequel le courant de commande augmenté du moteur d'entraînement (14) ne dépasse pas la valeur du courant correspondant à la puissance limite maximale du contrôleur de moteur (13).

2. Procédé de chauffage de la batterie d'alimentation d'un véhicule électrique selon la revendication 1, dans lequel les informations de demande de puissance comprennent des informations de demande de couple et des informations de demande de vitesse de rotation ; et
la détermination d'une puissance de chauffage par courant de la batterie d'alimentation (11) selon les informations de demande de puissance comprend :
l'obtention d'informations de conduite du moteur d'entraînement (14) selon les informations de demande de couple et les informations de demande de vitesse de rotation ; et
la détermination, selon les informations de conduite, d'un courant de conduite pendant la commande du moteur de traction (14) afin de mettre le véhicule électrique en fonctionnement par le contrôleur de moteur (13), et la détermination de la puissance de chauffage actuelle pour chauffer la batterie d'alimentation (11) selon le courant de conduite.

3. Procédé de chauffage de la batterie d'alimentation d'un véhicule électrique selon la revendication 1, dans lequel le fait d'amener le contrôleur de moteur (13) à augmenter le courant de commande du moteur d'entraînement (14) en fonction du courant de chauffage de compensation, de la puissance réactive et de la puissance limite maximale, de sorte que le moteur d'entraînement (14) délivre un courant oscillant à haute fréquence égal au courant de chauffage de compensation , comprend :
acquérir une puissance différentielle selon le courant de chauffage de compensation et la valeur de la résistance interne de la batterie d'alimentation (11) ; et
définir la somme de la puissance différentielle et de la puissance réactive comme une puissance superposée, et obtenir un courant superposé selon la puissance superposée et la valeur de la résistance interne de la batterie d'alimentation (11), de manière à augmenter le courant de commande du moteur d'entraînement (14) jusqu'à ce courant superposé.

4. Procédé de chauffage de la batterie d'alimentation pour un véhicule électrique selon la revendication 3, dans lequel l'augmentation du courant de commande du moteur d'entraînement (14) jusqu'à un courant superposé comprend :
l'augmentation du courant de commande du moteur d'entraînement (14) jusqu'au courant superposé en augmentant un courant d'excitation du moteur d'entraînement (14) ou par modulation vectorielle dans l'espace.

5. Procédé de chauffage de la batterie d'alimentation d'un véhicule électrique selon la revendication 1, dans lequel, après le déclenchement, pendant la commande du moteur d'entraînement (14) pour mettre le véhicule électrique en fonctionnement selon les informations de demande de puissance fournies par le contrôleur de moteur (13), le contrôleur de moteur (13) commande un courant de commande du moteur d'entraînement (14) selon le courant de chauffage de compensation, de sorte que le moteur d'entraînement (14) délivre un courant oscillant à haute fréquence égal au courant de chauffage de compensation, le procédé comprenant en outre :
l'acquisition d'un courant oscillant à haute fréquence émis par le moteur d'entraînement (14) après la régulation, et le signalement d'un échec de régulation si le courant oscillant à haute fréquence est inférieur au courant de chauffage de compensation ; et
détecter la température en temps réel de la batterie d'alimentation (11), et signaler une anomalie de température de la batterie d'alimentation (11) lorsque la température en temps réel est inférieure à une limite inférieure d'une plage de température normale prédéfinie.

6. Dispositif de chauffage de batterie d'alimentation pour un véhicule électrique, comprenant un module d'entraînement (1), un onduleur triphasé (12) et un contrôleur (10), dans lequel le module d'entraînement (1) comprend un contrôleur de moteur (13) et un moteur d'entraînement (14) ; le contrôleur de moteur (13) est connecté à l'onduleur triphasé (12), au contrôleur (10) et au moteur d'entraînement (14) ; l'onduleur triphasé (12) est connecté à la batterie d'alimentation (11) et au moteur d'entraînement (14) ; le contrôleur (10) est connecté à la batterie d'alimentation (11) ; et le contrôleur (10) est configuré pour :
acquérir une dé de la puissance de chauffage et de l' de la batterie d'alimentation (11) ;
acquérir en temps réel des informations relatives à la demande de puissance du module d'entraînement (1) du véhicule électrique, et
déterminer une puissance de chauffage actuelle de la batterie d'alimentation (11) selon les informations de demande de puissance ;
acquérir un courant de chauffage de compensation selon la demande de puissance de chauffage et la puissance de chauffage actuelle lorsque la puissance de chauffage actuelle est inférieure à la demande de puissance de chauffage, le courant de chauffage de compensation correspondant à une différence de puissance entre la demande de puissance de chauffage et la puissance de chauffage actuelle ;
faire en sorte que, pendant la commande du moteur de traction (14) par le contrôleur de moteur (13) pour faire fonctionner le véhicule électrique selon les informations de demande de puissance, le contrôleur de moteur (13) pour commander le courant de commande du moteur d'entraînement (14) selon le courant de chauffage de compensation, de sorte qu'un circuit oscillant dans le moteur d'entraînement (14) délivre un courant oscillant à haute fréquence correspondant à la puissance réactive ajoutée au moteur d'entraînement (14), égale au courant de chauffage de compensation ; et
amener la batterie d'alimentation (11) à effectuer un auto-échauffement selon le courant oscillant à haute fréquence émis par le moteur d'entraînement (14),
**caractérisé en ce que** le contrôleur (10) est en outre configuré pour :
acquérir en temps réel la puissance réactive du moteur d'entraînement (14) ;
acquérir une puissance limite maximale du contrôleur de moteur (13) ;
et amener le contrôleur de moteur (13) à augmenter le courant de commande du moteur d'entraînement (14) selon le courant de chauffage de compensation, la puissance réactive et la puissance limite maximale, de sorte que le moteur d'entraînement (14) délivre le courant oscillant à haute fréquence égal au courant de chauffage de compensation, dans lequel le courant de commande accru du moteur d'entraînement (14) ne dépasse pas la valeur du courant correspondant à la puissance limite maximale du contrôleur de moteur (13).

7. Dispositif de chauffage par batterie d'alimentation pour un véhicule électrique selon la revendication 6, dans lequel les informations de demande de puissance comprennent des informations de demande de couple et des informations de demande de vitesse de rotation ; et le contrôleur (10) est en outre configuré pour :
acquérir des informations de conduite du moteur d'entraînement (14) selon les informations de demande de couple et les informations de demande de vitesse de rotation ; déterminer, selon les informations de conduite, un courant d'entraînement pendant la commande du moteur d'entraînement (14) afin de mettre le véhicule électrique en fonctionnement par le contrôleur de moteur (13) ; et déterminer la puissance de chauffage actuelle pour chauffer la batterie d'alimentation (11) selon le courant d'entraînement.

8. Véhicule comprenant le dispositif de chauffage de batterie d'alimentation pour un véhicule électrique selon l'une quelconque des revendications 6 ou 7.
